# EUROPEAN PATENT SPECIFICATION

(11) **EP 1 960 248 B1**
(45) Date of publication and mention of the grant of the patent: **27.07.2011**
(21) Application number: 06806223.1
(22) Date of filing: 12.10.2006
(51) Int. Cl.: B62B 9/20, B62B 7/08

(54) **GRIP DEVICE, PARTICULARLY FOR PUSHCHAIRS, PRAMS AND THE LIKE**
GREIFVORRICHTUNG, INSBESONDERE FÜR SPORTWAGEN, KINDERWAGEN UND DERGLEICHEN
DISPOSITIF DE PRÉHENSION, EN PARTICULIER POUR DES POUSSETTES, LANDAUS, ETC.

(30) Priority: 18.10.2005 IT VR20050131
(43) Date of publication of application: 27.08.2008
(73) Proprietor: L'Inglesina Baby S.p.A., 36077 Altavilla Vicentina (IT)
(72) Inventor: TOMASI, Ivan, I-36050 Sovizzo (IT); GORZA, Roberto, I-32032 Feltre (IT); MARCHIORI, Nicola, I-36043 Camisano Vicentino (IT)
(74) Representative: Modiano, Micaela Nadia
(86) International application number: PCT/EP2006/009865
(87) International publication number: WO 2007/045396

(56) References cited:
- EP-A- 1 598 257
- EP-A2- 1 092 608
- US-A- 4 506 907
- US-A1- 2004 195 805

## Description

### Technical Field

The present invention relates to a pushchair comprising a grip device .

### Background Art

Currently, some frames for pushchairs and prams have a grip device which lies between the two ends of the handle tubes that are arranged upwardly during use, connecting them to each other.

Such kinds of grip devices allow, in some circumstances, more convenient use, since they can be gripped for example with just one hand.

However, although such grip devices are now widely used, they suffer drawbacks especially if they are fitted to frames for pushchairs of the type known as umbrella-folding due to the particular manner in which they close.

Such pushchair frames in fact fold both transversely and longitudinally (therefore in three dimensions) until they assume, when closed, a shape which can be likened to a closed umbrella.

It is evident that if one wishes to associate the grip device described above with umbrella-folding frames, it is necessary to provide such device in two or more connecting portions, which are rotatably articulated to each other so as to allow the transition of the frame from the extended condition to the collapsed condition. In any case, it is evident that in order to ensure sufficient rigidity of the grip device during use (and therefore when the frame is in the extended condition), it is advantageous to provide on such grip device means for locking mutual rotation among the different connecting portions.

Several constructive solutions have been proposed in this regard but have not proved to be devoid of drawbacks.

The most widely used solutions mutually connect the connecting portions that constitute the grip device by means of joints between which locking elements, which can be actuated manually by the user, act.

Although such solutions allow to obtain, when the frame is in the extended position, a certain rigidity of the grip device, they have a certain awkwardness in use, owing to the fact that the user is forced, after placing the frame in the extended condition, to act on the locking elements in order to lock each joint. The same action must of course be reverse--performed before placing the frame in the collapsed condition.

US 4 506 907 A discloses a pushchair according to the preambles of claim 1 and of claim 3 having a grip device which lies between the two ends of the handle tubes that are arranged upwardly during use, connecting them to each other, being fitted to a frame for pushchairs of the type known as umbrella-folding. Such well known pushchair frame folds both transversely and longitudinally (therefore in three dimensions) until it assumes, when closed, a shape which can be likened to a closed umbrella.

EP 1 092 608 A2 and US 2004/195805 A1 disclose a pushchair having a grip device which lies between the two ends of the handle tubes that are arranged upwardly during use, connecting them to each other, being fitted to a frame for pushchairs of the type known as umbrella-folding.

### Disclosure of the Invention

The aim of the present invention is to eliminate or at least reduce drastically the drawbacks noted currently in grip devices particularly for pushchairs, prams and the like described above.

Within this aim, an object of the invention is to provide a grip device which has such characteristics as to allow simplification of the operations for opening and closing the frame with which it is associated.

Another object of the present invention is to provide a grip device which is easy to use and offers the greatest assurances of reliability during operation.

Still another object of the invention is to devise a grip device which is constructively very simple, and has a low production cost, so that its use is advantageous also from an economical standpoint.

This aim and these and other objects are achieved by a pushchair comprising a grip device, as defined by claims 1 and 3.

### Brief Description of the Drawings

Further characteristics and advantages will become better apparent from the description of some preferred but not exclusive embodiments of a grip device according to the invention, illustrated by way of non-limiting example in the accompanying drawings, wherein:
Figure 1 is a perspective view of a pushchair frame provided with a grip device according to the invention in the fully extended condition;
Figure 2 is a view, similar to Figure 1, of a frame for pushchairs in the collapsed condition;
Figure 3 is a view of the frame shown in Figures 1 and 2 in an intermediate condition;
Figure 4 is a partially sectional top view of a grip device according to the present invention;
Figure 5 is an enlarged-scale view of a detail of the grip device shown in Figure 4;
Figure 6 is a sectional view of the grip device, taken along the plane of arrangement defined by the line VI-VI of Figure 4;
Figure 7 is a schematic top elevation view of a variation of the grip device according to the invention;
Figure 8 is a view of another variation of a grip device, shown in cross-section in order to illustrate schematically the locking means;
Figure 9 is an enlarged-scale view of a locking device shown in Figure 8;
Figure 10 is an enlarged-scale view of a particular form of connection between the grip device and a respective side of a pushchair frame;
Figure 11 is a sectional view of the grip device, taken along the plane of arrangement designated by the line XI-XI of Figure 8 and in which part of the outer enclosure has been omitted for the sake of clarity;
Figure 12 is an enlarged-scale view of a locking device shown in Figure 11;
Figure 13 is a view, taken from the same viewpoint as Figure 11, of a grip device with the frame in the collapsed condition;
Figure 14 is an enlarged-scale view of a locking device shown in Figure 13;
Figure 15 is a side elevation view of an umbrella-folding frame provided with a grip device according to the invention and in which parts of the outer enclosures of the front uprights have been omitted for the sake of clarity;
Figure 16 is another side elevation view, but in enlarged scale, of the mechanism for locking/releasing the frame in the extended condition shown in Figure 15;
Figure 17 is another partially sectional side elevation view, but in enlarged scale, of the region for connection between the side and the grip device of the frame in the extended condition shown in Figure 15;
Figure 18 is another side elevation view, but in enlarged scale, of the lower portion of the front upright with the frame in the extended condition shown in Figure 15;
Figure 19 is a side elevation view of an umbrella-folding frame provided with a grip device according to the invention and in which parts of the outer enclosures of the front uprights have been omitted for the sake of clarity, during actuation of the actuation device;
Figure 20 is another side elevation view, but in enlarged scale, of the mechanism for locking/releasing the frame in the condition shown in Figure 19, during actuation of the actuation device;
Figure 21 is another partially sectional side elevation view, but in enlarged scale, of the region of connection between the side and the grip device of the frame in the condition shown in Figure 19;
Figure 22 is another side elevation view, but in enlarged scale, of the lower portion of the front upright, with the frame in the condition shown in Figure 19;
Figure 23 is a schematic view of another variation of the grip device, in which the (upper and lower) front upright is associated with the locking/release mechanism, with the frame in the extended condition;
Figure 24 is a schematic view of the (upper and lower) front upright associated with the locking/release mechanism during actuation of the locking/release mechanism;
Figure 25 is a schematic view of the (upper and lower) front upright associated with the locking/release mechanism with the frame in the collapsed or intermediate condition.

### Ways of carrying out the Invention

With reference to the figures, a grip device particularly for pushchairs, prams and the like is generally designated by the reference numeral 1 and comprises a connecting body 2, which is composed of a plurality of connecting elements 30.

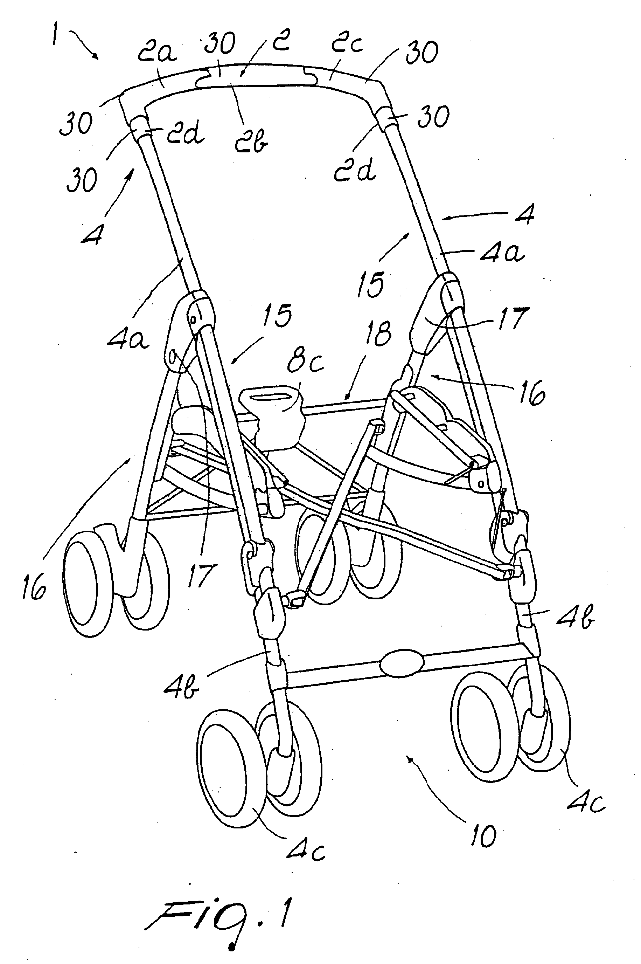

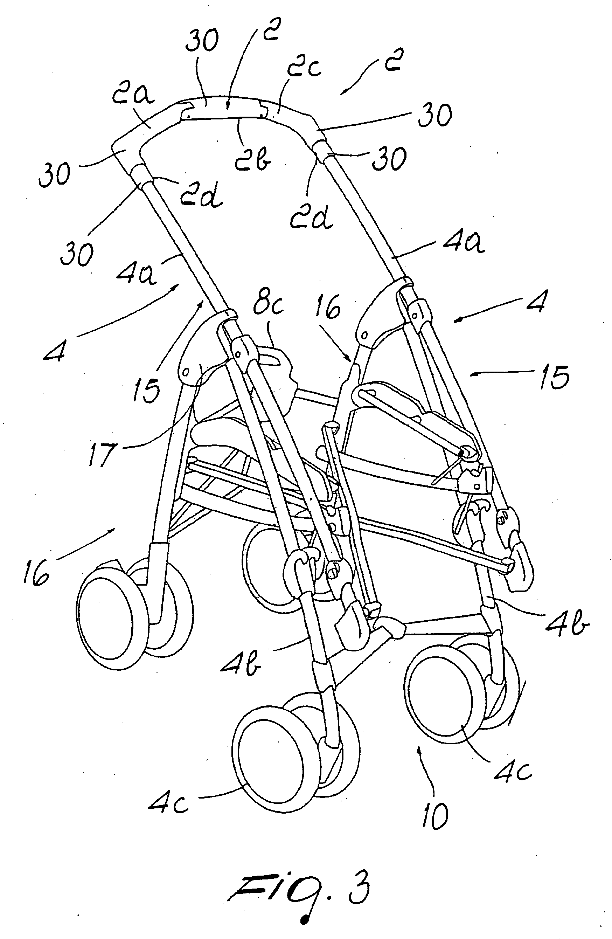

In particular, the connecting elements 30 comprise two connection ends 2d which are coupled, as explained in greater detail hereinafter, to a respective connecting element 3, which is provided at a respective side 4 of a frame 10 for pushchairs, prams and the like: with reference to the embodiment shown in Figures 1 to 3, the frame 10 can be of the so-called umbrella-folding type and the connecting elements 3 can, in this and other cases, be constituted by the ends of the handle tubes (also referenced as upper front uprights) 4a of said frame 10 that are arranged upwardly during use.

With particular reference first of all to Figures 1 to 3, the connecting body 2 comprises at least two connecting portions which are mutually articulated about a respective rotation axis 100. In particular, in the examples shown in the figures, the connecting body comprises three connecting portions (2a, 2b and 2c), which are mutually articulated in pairs about a respective rotation axis 100.

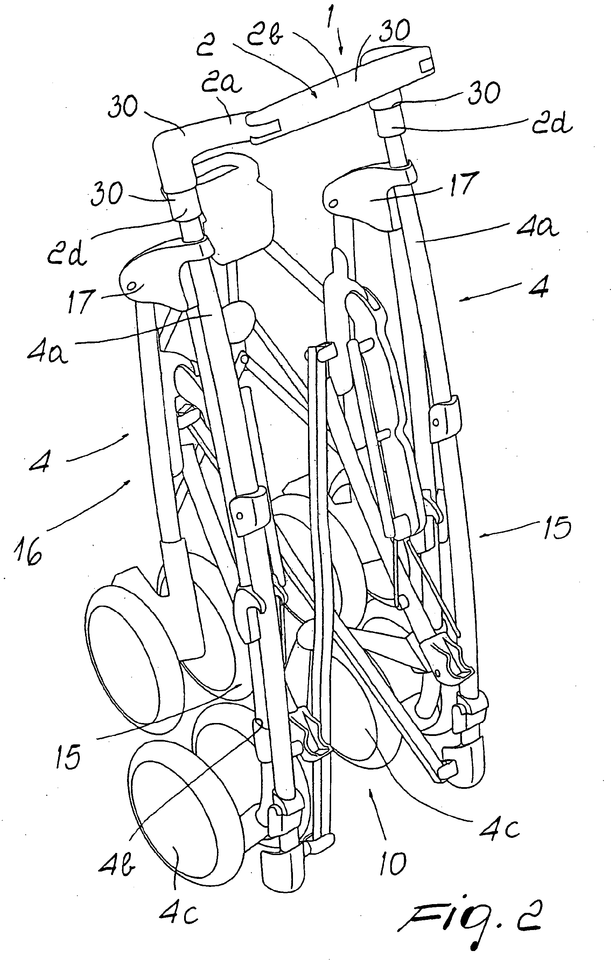

The frame 10 is meant to pass from an extended (or open) condition, shown in Figure 1, to a collapsed (or closed) condition, shown in Figure 2, and vice versa: in particular, it is evident that when the frame 10 is in the extended condition the sides 4 are spaced one another, while when the frame 10 is in the collapsed condition the sides 4 (as shown in Figure 2) are closer.

During the transition of the frame 10 from the extended condition to the collapsed condition and vice versa, the connecting portions 2a, 2b and 2c rotate about the respective rotation axis 100.

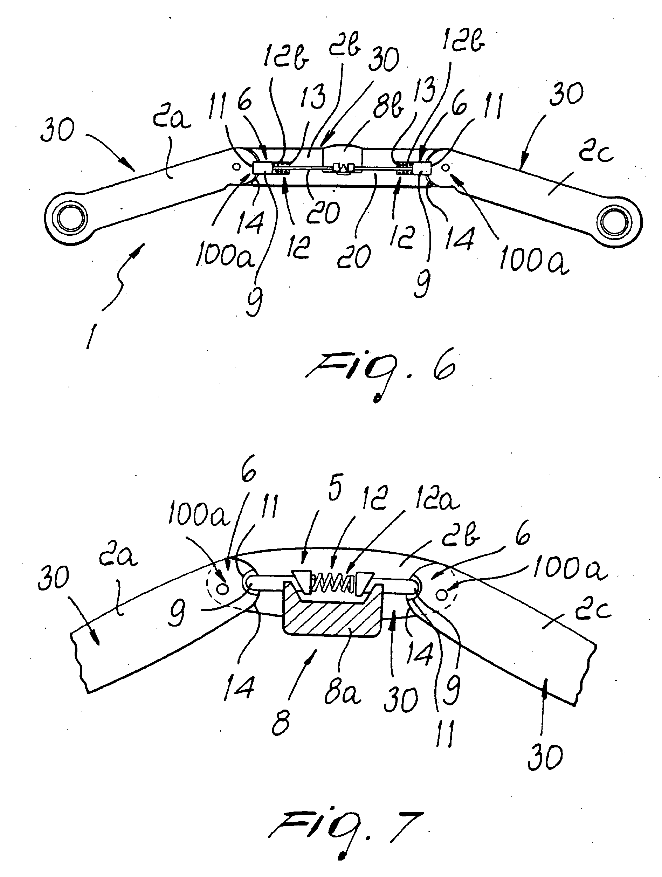

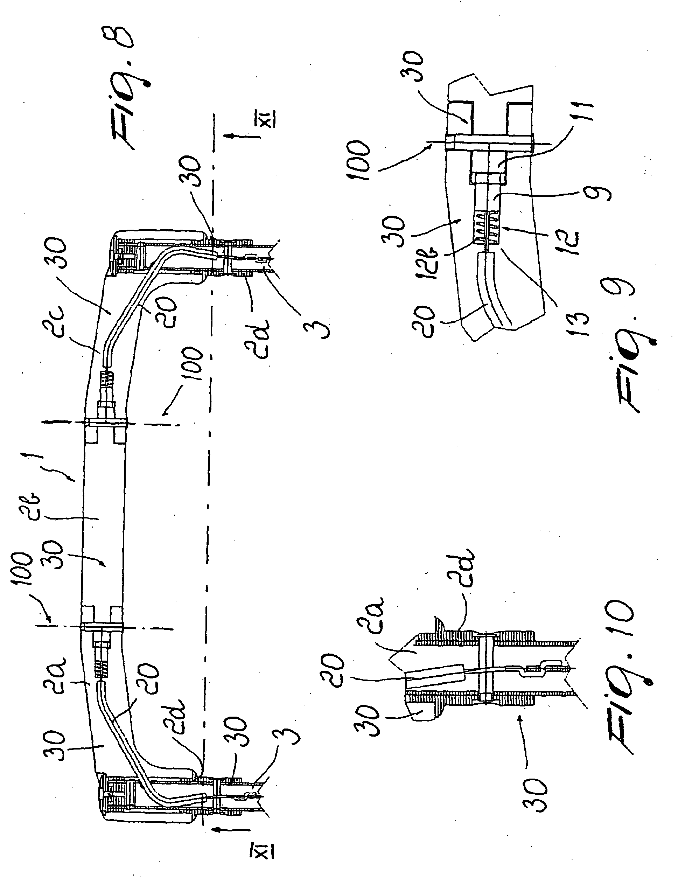

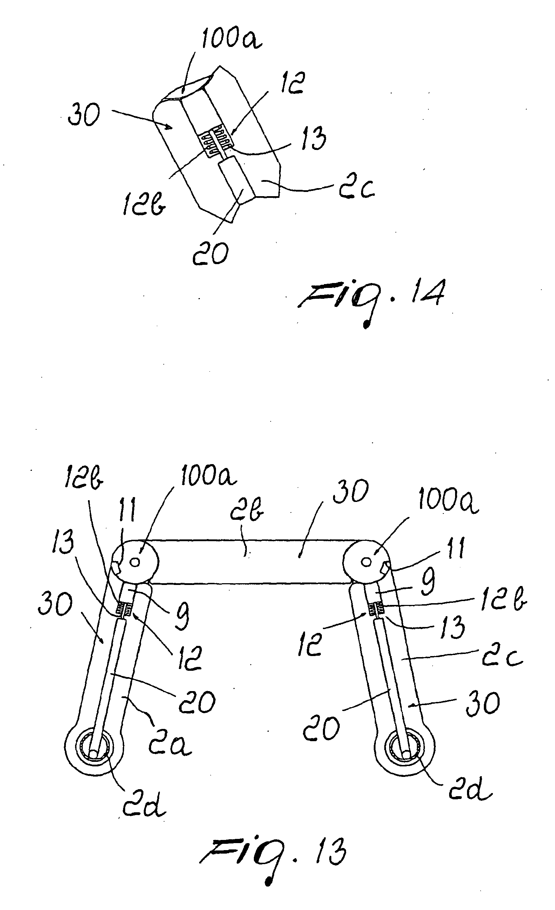

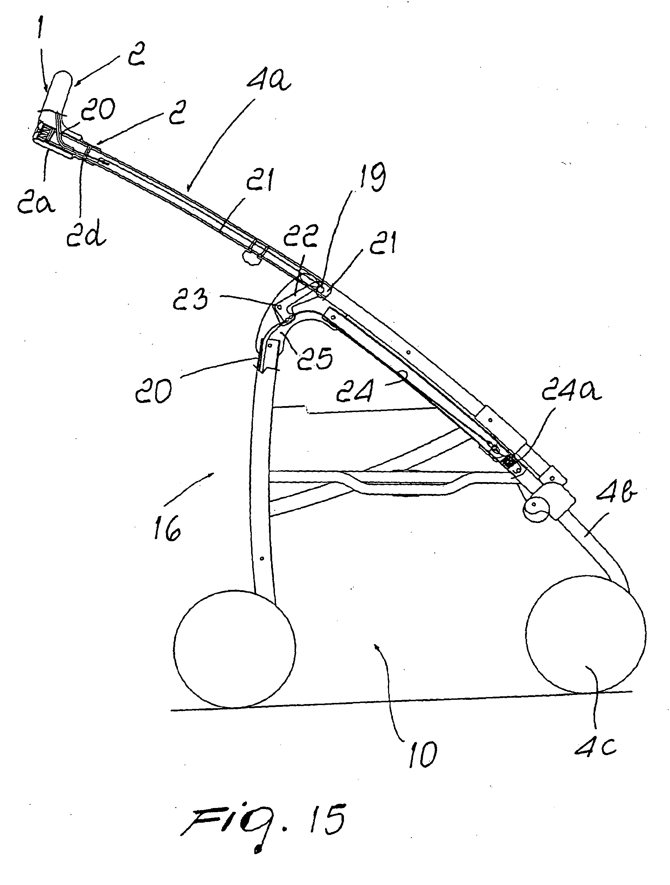

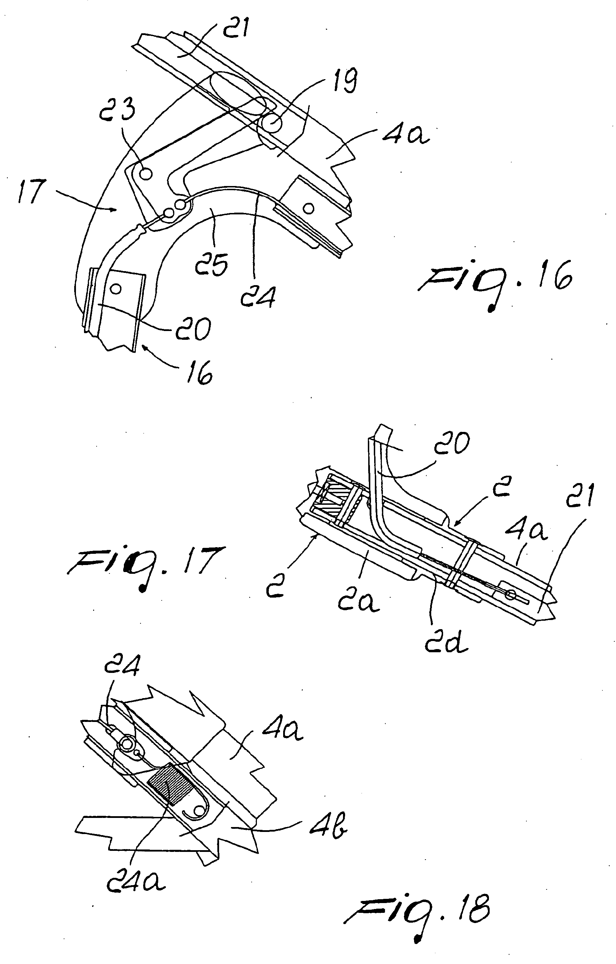

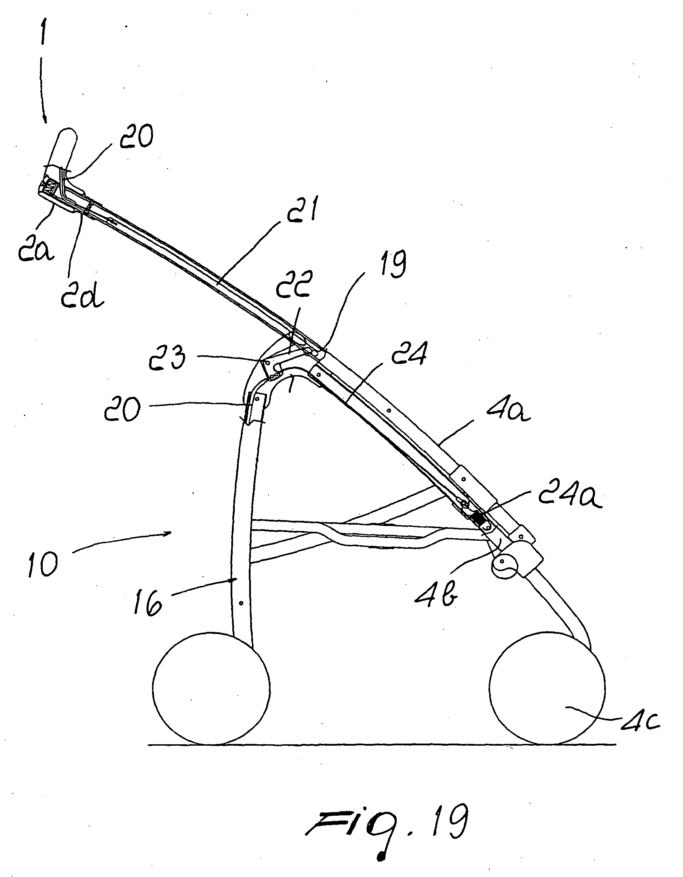

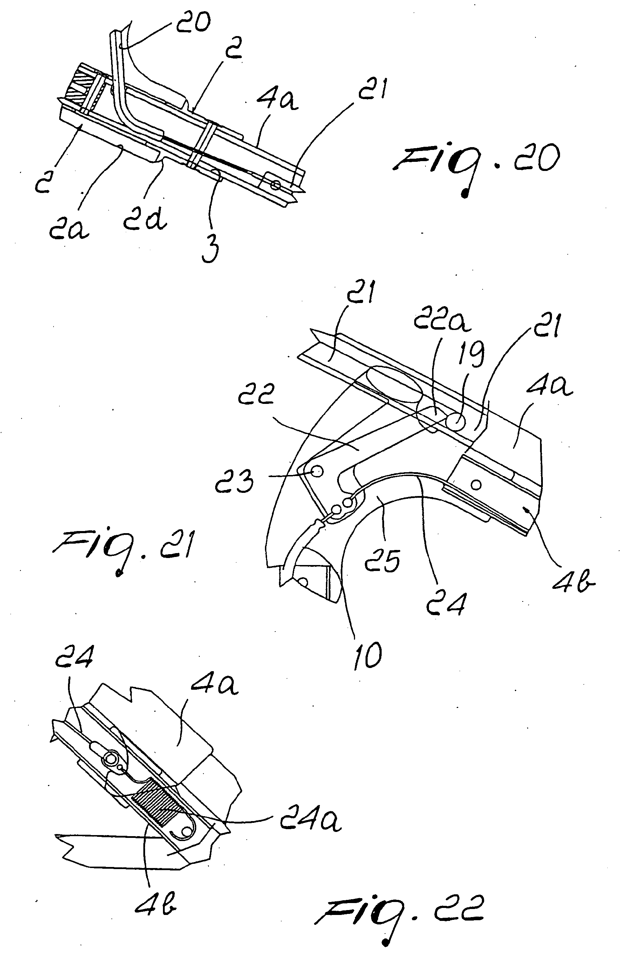

The grip device 1 is provided with locking means 5, which comprise at least one locking device 6 which acts between at least one pair of connecting elements 30 and in particular, in the constructive variations shown in Figures 6 to 21, between at least one pair of connecting portions (2a, 2b; 2b, 2c) which are mutually articulated about their respective rotation axis 100 and are therefore arranged contiguously: in particular, the locking device or devices is/are adapted to lock the relative rotation of the respective pair of connecting portions (2a, 2b; 2b, 2c) when the frame 10 is moved to the extended condition. It is evident that in the illustrated embodiments, during the transition of the frame from the collapsed condition to the extended condition and vice versa, the connecting portions arranged at the ends (and therefore the connecting portions 2a and 2c) rotate also about a second axis of rotation, which corresponds substantially to the longitudinal direction of the upper upright 4c and with respect to the connecting elements 30 which provide the connecting ends 2d.

In greater detail, the or each locking device 6 is adapted to lock (or release) on command the rotation of one connecting element with respect to the other about the respective rotation axis 100.

The locking means 5 comprise means for remotely actuating the locking device or devices 6.

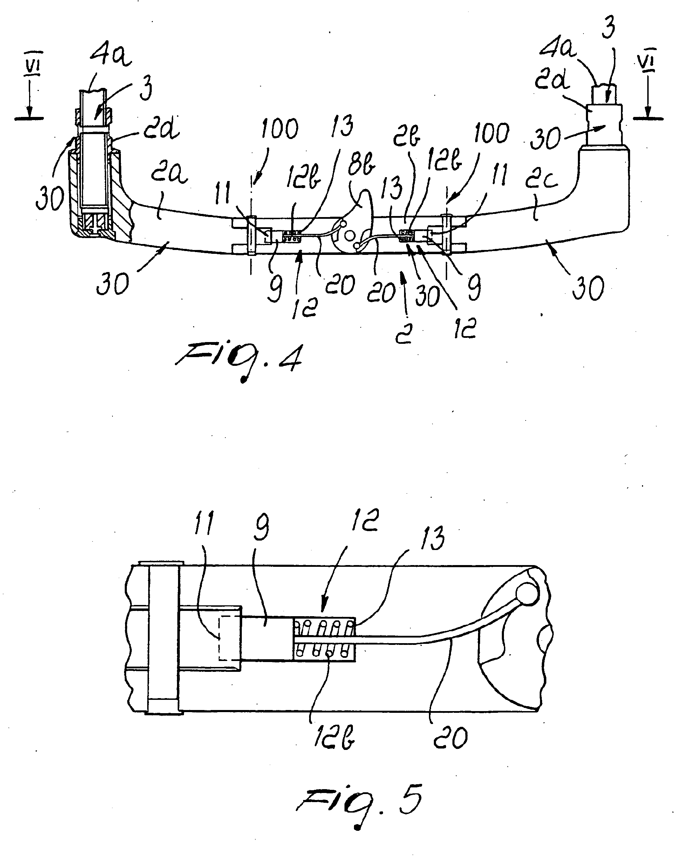

As shown in the embodiments illustrated in Figures 4 to 7, the locking means 5 can comprise at least two locking devices 6, each of which acts on a pair of connecting portions (2a, 2b; 2b, 2c) which are contiguous and are articulated to each other at an articulation node 100a: in this case, it is advantageous to provide the remote actuation means so that they are adapted to act substantially simultaneously on the two (or more) locking devices 6.

Conveniently, the remote actuation means can be provided by an actuation device 8 (such as an actuation button 8a, as shown in Figure 7, or an actuation lever system 8b, as in the embodiment shown in Figures 4 to 6).

In these particular embodiments, each of the two locking devices provides for the presence of one or more engagement teeth 9 (which in the illustrated examples are supported by the connecting portion 2b), which are connected kinematically, for example by means of a respective cable 20, which is optionally sheathed, to the actuation device 8: the engagement tooth or teeth 9 can be engaged, when the frame 10 is in the extended condition, in a respective engagement seat 11, which is supported by the connecting portions (in this case 2a and 2c) which are articulated (at the pivoting node 100a) to the connecting portion 2b on which the engagement teeth 9 are provided.

In order to allow the engagement teeth 9 to remain engaged within the respective engagement seat 11 so as to prevent the relative rotation of the pairs of connecting portions 2a, 2b; 2b, 2c about the respective axis of rotation 100, it is convenient for said engagement teeth 9 to be associated with loading means (constituted advantageously by springs 12), which are designed to keep said engagement teeth 9 loaded in order to press within the respective engagement seat 11.

The loading, means can be provided by providing a single interconnection spring 12a, which is rigidly connected, at its ends, to an engagement tooth 9 and can be compressed by moving the actuation button 8a in order to disengage each engagement tooth 9 from the respective engagement seat 11.

As an alternative, as shown in Figures 4 to 6, it is possible to provide a loading spring 12b, which acts between each engagement tooth 9 and an abutment recess 13 provided on the connecting portion (in this case, the connecting portion 2b) which supports the engagement tooth or teeth. Such spring, as in the previously described case, is loaded so as to keep the engagement tooth or teeth 9 associated therewith pressed within the respective engagement seat 11 when the frame 10 is in the extended condition and therefore when the grip device 1 is in the condition shown in Figures 4 and 6.

By actuating the actuation device 8, the engagement tooth or teeth 9 is/are disengaged from the respective engagement seat 11, allowing in this way the relative rotation of the pairs of connecting portions 2a, 2b; 2b, 2c about the respective rotation axis 100. The or each engagement seat 11 is shaped so that the engagement tooth or teeth 9, once disengaged from the respective engagement seat 11, can slide freely at the region identified by the respective pivoting node 100a.

In this regard, as can be seen in the schematic views shown in Figures 4 and 7, it is possible to provide, on the connecting portion 2a and 2c that forms the engagement seat 11, proximate to the edges of said seat 11, a sliding portion for the engagement tooth or teeth 9, which is constituted for example by a portion arranged along a circular arc 14 which is centered at the axis of rotation 100.

According to a particular embodiment, the grip device 1 can be associated with a frame 10 which has two sides 4, each of which comprises a respective front upright 15 and a respective rear upright 16.

The front upright 15 comprises a respective upper upright (also referenced as handle tube), already designated by the reference numeral 4a, and a lower upright 4b, which supports a wheel assembly 4c; said uprights are kinematically connected to each other by way of the interposition of a locking/release mechanism 17 which will be described in greater detail hereinafter.

Between the two rear uprights 16 there is an articulated interconnection structure 18, which is constituted generally by a so-called "double parallelogram" for interconnection between the two rear uprights 16 and is adapted to allow, during the transition of the frame 10 from the extended condition to the collapsed condition and vice versa, to keep the rear uprights 16, and therefore consequently the sides 4, parallel to each other.

On at least one, but advantageously on both, of the sides 4 there is, as mentioned, a locking/release mechanism 17, which is adapted to allow (or prevent) the relative movement between the upper upright 4a and the respective lower upright 4b during the transition of the frame 10 from the extended condition to the closed or collapsed condition and vice versa.

The remote actuation device 8 provided on the grip device 1 is kinematically connected not only to the (or each) locking device 6, but also to the (or each) locking/release mechanism 17 between the respective lower and upper uprights 4b and 4a.

In practice, by acting exclusively on a single device, one obtains the release both of the locking/release mechanism 17 (in order to allow the closure of the frame by allowing rotary and translational motion between the upper upright 4a and the respective lower upright 4b) and of the locking devices 6 in order to allow the relative rotation of the connecting portions (2a, 2b; 2b, 2c) about the respective rotation axis 100.

Conveniently, the actuation device 8 can be provided at a lifting handle 8c, which is arranged substantially at the articulated interconnection structure 18.

In this regard, it is possible to connect, by means of separate sheathed cable portions 20, the lifting handle 8c arranged at the articulated interconnection structure 18 to the (or each) locking device 6 and to the (or each) locking/release mechanism 17.

However, there is nothing to prevent the provision of a sheathed cable 20 (or of course of a technically equivalent element, such as a rod or a flexible cable) for connection between the lifting handle 8c and the locking/release mechanism 17 and, in turn, an additional sheathed cable 20, which connects the locking/release mechanism 17 (and in particular a portion thereof which can be moved during the actuation of the locking/release mechanism 17 following the intervention of the user on the actuation device 8) to the (or to a respective) locking device 6 formed on the grip device 1.

It is of course evident that it is fully equivalent to provide a first portion of sheathed cable 20 designed to connect the actuation device 8 to one or more locking devices 6 and a second portion of sheathed cable 20 which connects said locking device or devices 6 to the locking/release mechanism or mechanisms 17.

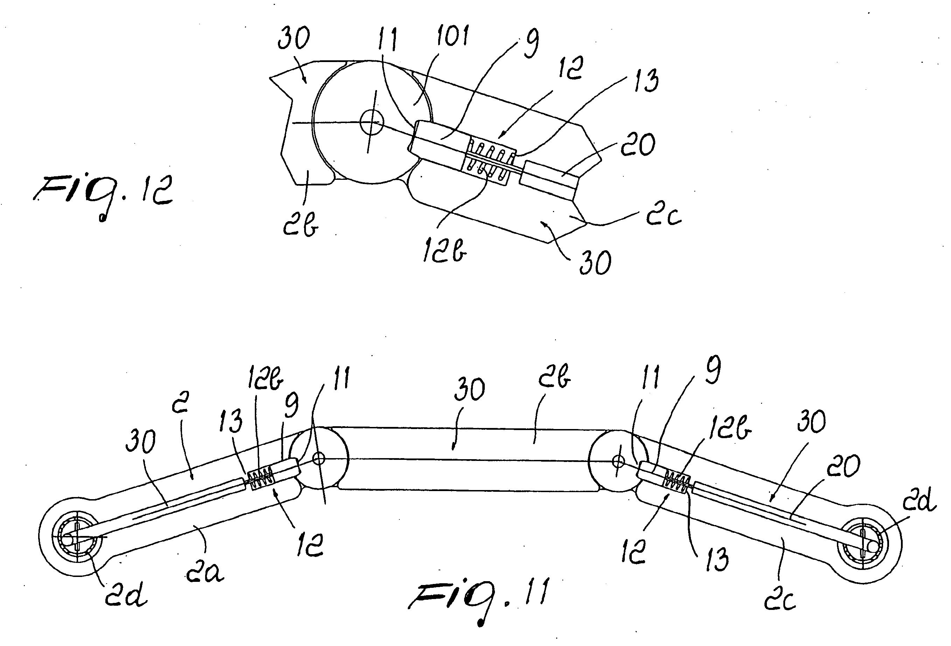

With particular reference to the embodiments shown in Figures 11 to 22, it can be seen that in this case the portion of cable 20 that is designed to actuate the locking devices 6 of the grip device 1 is connected to an actuation pin 19, which is supported by an actuation rod 21 which is mounted so that it can slide in an axial direction with respect to the handle tube 4a. The actuation pin 19 can be engaged by a release lever system 22, which is mounted so that it can rotate about an oscillation pivot 23 on a support 25 for connection between the rear upright 16 and the respective front upright 15.

The release lever system 22 is kept loaded by a tensioning cable 24, which has, along its extension, a tensioning spring 24a and is anchored to the lower end of the lower upright 4b.

In this particular embodiment, it is convenient to provide means for actuating the release lever system 22, which can be arranged in the vicinity of the grip device 1 or, as shown, at the lifting handle 8c. In this case, of course, it is convenient to provide a second portion of sheathed cable 20 (or, in a manner similar to what has been mentioned earlier, a similar kinematic connecting element) which is designed to connect the lifting handle 8c to the release lever system 22: it is evident that by means of the actuation rod 21 and the first portion of sheathed cable 20 the lifting handle 8c, when actuated, produces an action not only on the locking/release mechanism 17 but also on the (or each) locking device 6.

In a manner which is fully equivalent from the conceptual standpoint, the locking means 5 can act between the connecting ends 2d and the connecting portions articulated thereto, which in the embodiments shown in the drawings are designated by the reference numerals 2a and 2c.

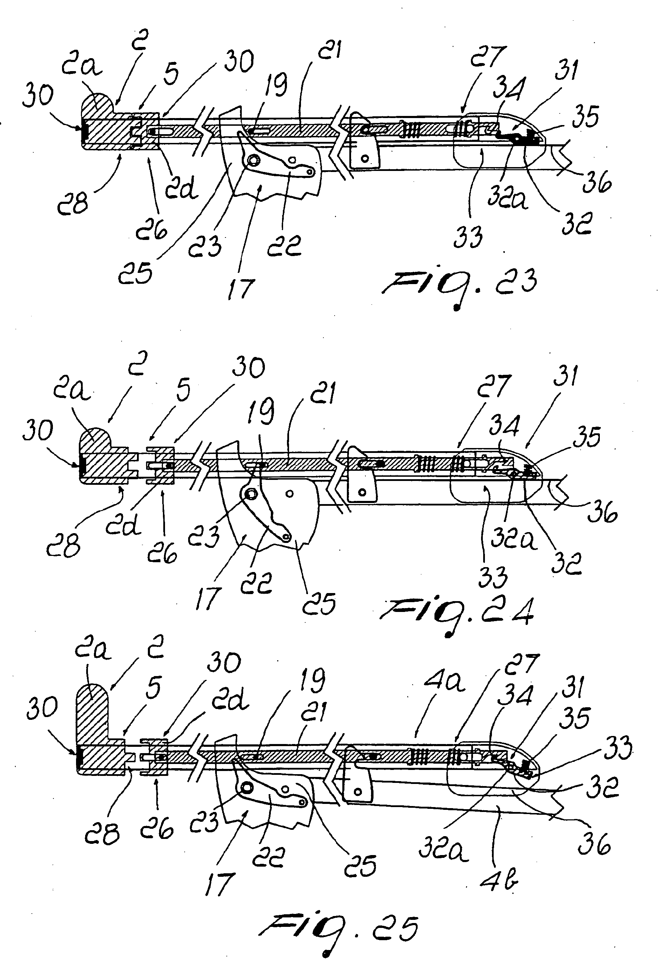

With particular reference in this case to Figures 23 to 25, the locking device 6 can be provided by providing a locking assembly 26, which can move along the longitudinal direction of the upper upright (or handle tube) 4a, following the actuation of the remote actuation means and in particular, in the illustrated case, following the actuation of the locking/release mechanism 17.

In particular, in this embodiment, the connecting ends 2d are constituted in practice by said locking assemblies 26, which, when the frame 10 is in the extended condition, are loaded, by way of the action of elastic means 27 which act between the upper upright (or handle tube) 4a and the actuation rod 21 associated therewith, so as to press against a complementarily shaped abutment portion 28 which is provided at the connecting portions 2a and 2c, which form part of the grip device 1.

It is evident that in this particular embodiment it is not necessary to provide locking devices 6 which act between pairs of connecting portions, since the locking of the connecting portions 2a, 2c with respect to the connecting ends 2d inherently ensures the stability of the entire grip device 1.

According to a last important aspect, also shown in the schematic Figures 23 to 25 but applicable to all the embodiments shown and described previously, the or each locking device 6 can be associated with an actuation device 31, which is adapted to allow the mutual locking of the respective pair of connecting elements 2 only when the frame 10 is in a fully open or extended condition.

According to a first exemplary of embodiment, the actuation device 31 comprises an opening sensor 32, which is meant to pass between an active condition (shown in Figures 23 and 24) when the frame is in the open or extended condition and an inactive condition (shown in Figure 25) when the frame 10 is not in the open or extended condition.

The sensor 32 can comprise a hook which is mounted so that it can oscillate about a respective oscillation pivot 32a with respect to a lower support 33, which is fixed to the handle tube 4b and is kept, in the inactive condition, engaged with a respective engagement portion 34, which is rigidly coupled to the actuation rod 21, by a loading spring 35.

When the frame 10 moves to the fully extended condition (shown in Figures 23 and 24), the hook is designed to abut against an abutment portion 36 provided on the lower upright 4b: this produces the compression of the loading spring 35 and the consequent disengagement of the hook from the respective engagement portion 34.

Operation of the grip device according to the present invention is evident from what has been described above.

With reference initially to the embodiment shown in Figures 4 to 7, if the user wishes to move the frame 10 from the extended condition to the collapsed condition, he acts first of all on the remote actuation means in order to release the locking device or devices 6 and then acts on the actuation devices of the locking/release mechanisms of the frame, of whatever kind they may be.

Likewise, in order to open the frame, first of all the frame is moved to the extended position and then, by means of a slight pressure on the handle itself, the one or more locking devices provided on said grip device is/are moved to the locking condition.

If advantageously the remote actuation means can actuate simultaneously both the locking/release mechanism and the device or devices for locking the grip device, opening and closure are further simplified, since it is sufficient for the user to act on said remote actuation means (provided for example at the lifting handle) in order to release, simultaneously and with a single operation, both the locking/release mechanism and the device or devices for mutually locking the different connecting elements that provide the grip device, so as to allow the transition of the frame from the extended condition to the collapsed condition.

Moreover, if the grip device is provided with the opening sensor, it has been found that the mutual locking of the different connecting elements of the handle can occur only when the frame is in an extended condition, avoiding the possibility that the locking devices (which act on the grip device) might lock the connecting elements of the handle when the frame is not yet fully extended, a situation which would cause a certain difficulty and danger during use and during the mutual locking of the front uprights.

All the characteristics indicated above as advantageous, convenient or the like may also be omitted or be replaced with equivalents.

The invention as defined by the appended claims is susceptible of numerous modifications and variations .

Thugs, for example, the remote actuation means can provide for the use of an automatic actuation button, such as a signal transmitter, which is connected wirelessly to the locking device.

In practice it has been found that the invention has achieved the intended aim and objects in all or its embodiments.

In practice, the materials used, as well as the dimensions, may be any according to requirements.

## Claims

1. A pushchair comprising a grip device (1), the grip device (1) comprising a connecting body (2) provided with a plurality of firs connecting elements (30), which comprise two connecting ends (2d), which are coupled to a respective second connecting element (3) provided at a respective side (4) of a frame (10) for pushchairs designed to pass from a closed or collapsed condition to an open or extended condition and vice versa,
at least two connecting portions (2a, 2b, 2c), which are articulated to each other and connect said two connecting ends (2d),
means (5) for locking said grip device (1) with said frame (10) in the open or extended condition being provided, said locking means (5) comprising at least one locking device (6), which acts between a pair of contiguously arranged first connecting elements (30) and is adapted to lock on command the rotation of one second connecting element (3) with respect to the other,
means (8) for the remote actuation of said at least one locking device (6) comprising a lifting handle (8c),
each of said two sides (4) of said frame (10) comprises a respective upper (4a) and lower (4b) front upright (15) and a rear upright (16) and an articulated structure (18) for interconnecting the two rear uprights (16),
a mechanism (17) for mutual locking/release between said upper upright (4a) and the respective lower upright (4b) being provided on at least one of said two sides (4) for the transition of said frame (10) from said open or extended condition to said closed or collapsed condition and vice versa, said means for the remote actuation (8) of said at least one locking device (6) being designed to actuate said locking/release mechanism (17),
**characterized in that** said remote actuation means (8) comprise first means for kinematic connection between said lifting handle (8c) and said locking device (6),
said remote actuation means (8) comprise second means for kinematic connection between said lifting handle (8c) and said locking/release mechanism (17).

2. The grip device according to claim 1, **characterized in that** said
lifting handle (8c) is arranged substantially at said articulated interconnection structure (18).

3. A pushchair comprising a grip device (1), the grip device (1) comprising:
a connecting body (2) provided with a plurality of first connecting elements (30), which comprise two connecting ends (2d), which are coupled to a respective second connecting element (3) provided at a respective side (4) of a frame (10) for pushchairs designed to pass from a closed or collapsed condition to an open or extended condition and vice versa,
at least two connecting portions (2a, 2b, 2c), which are articulated to each other and connect said two connecting ends (2d),
means (5) for locking said grip device (1) with said frame (10) in the open or extended condition being provided, said locking means (5) comprising- at least one locking device (6), which acts between a pair of contiguously arranged first connecting elements (30) and is adapted to lock on command the rotation of one second connecting element (3) with respect to the other,
means (8) for the remote actuation of said at least one locking device (6), each of said two sides (4) of said frame (10) comprises a respective upper (4a) and lower (4b) front upright (15) and a rear upright (16) and an articulated structure (18) for interconnecting the two rear uprights (16),
a mechanism (17) for mutual locking/release between said upper upright (4a) and the respective lower upright (4b) being provided on at least one of said two sides (4) for the transition of said frame (10) from said open or extended condition to said closed or collapsed condition and vice versa, said means for the remote actuation (8) of said at least one locking device (6) being designed to actuate said locking/release mechanism (17), said remote actuation means (8) comprise a lifting handle (8c) which is arranged substantially at said articulated interconnection structure (18),
**characterized in that** said remote actuation means (8) comprise second means for kinematic connection between said lifting handle (8c) and said locking/release mechanism (17) and third means for kinematic connection between said locking/release mechanism (17) and said at least one locking device (6).

4. The pushchair according to one or more of the preceding claims, **characterized in that** said first, second or third kinematic connection means comprise a sheathed cable (20).

5. The pushchair according to claim 1 or 3, **characterized in that** said at least one locking device (6) acts between at least one connecting end (2c) and the connecting portion (2a, 2b, 2c) associated therewith, said locking device (6) being adapted to lock the relative rotation of said connecting portion (2a, 2b, 2c) with respect to the respective connecting end (2c).

6. The pushchair according to one or more of claims 1, 3 and 5, **characterized in that** said third means for kinematic connection between said locking/release mechanism (17) and said at least one locking device (6) comprise an actuation rod (21), which is mounted so that it can slide with respect to the respective upper upright (4a).

7. The pushchair according to claim 6, **characterized in that** said actuation rod (21) comprises an actuation pin (19), which can be engaged by a release lever system (22), which is supported by said locking/release mechanism (17) and can be actuated by said remote actuation means (8).

8. The pushchair according to one or more of the preceding claims, **characterized in that** said locking device (6) is provided with an actuation device (31) which is adapted to allow mutual locking between the respective pair of first connecting elements (30) only when said frame (10) is in the fully open or extended condition.

9. The pushchair according to claim 8, **characterized in that** said actuation device (31) comprises an opening sensor (32) which is designed to pass from an active condition, when said frame (10) is in the open or extended condition, to an inactive condition, when said frame (10) is not in the open or extended condition.

10. The pushchair according to claim 9, **characterized in that** said opening sensor (32) comprises a hook which is pivoted to a lower support (33) which is
fixed to said upper upright (4a) and is kept engaged, by a loading spring (35), with a respective engagement portion (34) formed on a respective actuation rod (21) when said frame (10) is in the collapsed condition.

11. The pushchair according to claim 10, **characterized in that** when said frame (10) is in the extended condition said hook is designed to abut against an abutment portion (36) formed on the lower upright (4b) in order to disengage from the respective engagement portion (34).

## Patentansprüche

1. Kinderwagen mit einer Griffvorrichtung (1), wobei die Griffvorrichtung (1) aufweist:
einen Verbindungskörper (2), der mit mehreren ersten Verbindungselementen (30) versehen ist, die zwei Verbindungsenden (2d) umfassen, die mit einem jeweiligen zweiten Verbindungselement (3) verbunden sind, das an einer jeweiligen Seite (4) eines Rahmens (10) für Kinderwägen vorgesehen ist, die dazu konstruiert sind, aus einem geschlossenen oder zusammengeklappten Zustand zu einem offenen oder auseinandergeklappten Zustand und umgekehrt überzugehen,
mindestens zwei Verbindungsabschnitte (2a, 2b, 2c), die aneinander angelenkt sind und die beiden Verbindungsenden (2d) verbinden,
wobei eine Einrichtung (5) zum Arretieren der Griffvorrichtung (1) mit dem Rahmen (10) im offenen oder auseinandergeklappten Zustand vorgesehen ist, wobei die Arretiereinrichtung (5) mindestens eine Arretiervorrichtung (6) umfasst, die zwischen einem Paar benachbart angeordneter erster Verbindungselemente (30) wirkt und dazu ausgelegt ist, die Drehung eines zweiten Verbindungselements (3) im Hinblick auf das andere auf Befehl zu arretieren,
Einrichtungen (8) zur Fernbetätigung der mindestens einen Arretiervorrichtung (6), die einen Hebegriff (8c) umfasst,
wobei jede der beiden Seiten (4) des Rahmens (10) einen oberen (4a) und unteren (4b) vorderen Holm (15) und einen hinteren Holm (16) und eine Gelenkstruktur (18) zur gegenseitigen Verbindung der beiden hinteren Holme (16) umfasst,
wobei ein Mechanismus (17) für eine wechselseitige Verriegelung/Freisetzung zwischen dem oberen Holm (4a) und dem jeweiligen unteren Holm (4b) an zumindest einer der beiden Seiten (4) für den Übergang des Rahmens (10) aus dem offenen oder auseinaindergeklappten Zustand zum geschlossenen oder zusammengeklappten Zustand und umgekehrt vorgesehen ist, wobei die Einrichtungen (8) zur Fernbetätigung der mindestens einen Arretiervorrichtung (6) dazu konstruiert sind, den Verriegelungs-/Freisetzungsrnecharlismus (17) zu betätigen,
**dadurch gekennzeichnet, dass** die Fernbetätigungseinrichtungen (8) erste Einrichtungen zur kinematischen Verbindung zwischen dem Hebegriff (8c) und der Arretiervorrichtung (6) umfassen,
wobei die Fernbetätigungseinrichtungen (8) zweite Einrichtungen zur kinematischen Verbindung zwischen dem Hebegriff (8c) und dem Verriegelungs-/Freisetzungsmechanismus (17) umfassen.

2. Griffvorrichtung nach Anspruch 1, **dadurch gekennzeichnet, dass** der Hebegriff (8c) im Wesentlichen an der Gelenkverbindungsstruktur (18) angeordnet ist.

3. Kinderwagen mit einer Griffvorrichtung (1), wobei die Griffvorrichtung (1) aufweist:
einen Verbindungskörper (2), der mit mehreren ersten Verbindungselementen (30) versehen ist, die zwei Verbindungsenden (2d) umfassen, die mit einem jeweiligen zweiten Verbindungselement (3) verbunden sind, das an einer jeweiligen Seite (4) eines Rahmens (10) für Kinderwägen vorgesehen ist, die dazu konstruiert sind, aus einem geschlossenen oder zusammengeklappten Zustand zu einem offenen oder auseinandergeklappten Zustand und umgekehrt überzugehen,
mindestens zwei Verbindungsabschnitte (2a, 2b, 2c), die aneinander angelenkt sind und die beiden Verbindungsenden (2d) verbinden,
wobei eine Einrichtung (5) zum Arretieren der Griffvorrichtung (1) mit dem Rahmen (10) im offenen oder auseinandergeklappten Zustand vorgesehen ist, wobei die Arretiereinrichtung (5) mindestens eine Arretiervorrichtung (6) umfasst, die zwischen einem Paar benachbart angeordneter erster Verbindungselemente (30) wirkt und dazu ausgelegt ist, die Drehung eines zweiten Verbindungselements (3) im Hinblick auf das andere auf Befehl zu arretieren,
Einrichtungen (8) zur Fernbetätigung der mindestens einen Arretiervorrichtung (6),
wobei jede der beiden Seiten (4) des Rahmens (10) einen oberen (4a) und unteren (4b) vorderen Holm (1,5) und einen hinteren Holm (16) und eine Gelenkstruktur (18) zur gegenseitigen Verbindung der beiden hinteren Holme (16) umfasst,
wobei ein Mechanismus (17) für eine wechselseitige Verriegelung/Freisetzung zwischen dem oberen Holm (4a) und dem jeweiligen unteren Holm (4b) an zumindest einer der beiden Seiten (4) für den Übergang des Rahmens (10) aus dem offenen oder auseinandergeklappten Zustand zum geschlossenen oder zusammengeklappten Zustand und umgekehrt vorgesehen ist, wobei die Einrichtungen (8) zur Fernbetätigung der mindestens einen Arretiervorrichtung (6) dazu konstruiert sind, den Verriegelungs-/Freisetzungsmechanismus (17) zu betätigen, wobei die Fernbetätigungseinrichtungen (8) einen Hebegriff (8c) umfassen, der im Wesentlichen an der Gelenkverbindungsstruktur (18) angeordnet ist,
**dadurch gekennzeichnet, dass** die Fernbetätigungseinrichtungen (8) zweite Einrichtungen zur kinematischen Verbindung zwischen dem Hebegriff (8c) und dem Verriegelungs-/Freisetzungsmechanismus (17) und dritte Einrichtungen zur kinematischen Verbindung zwischen dem Verriegelungs-/Freisetzungsmechanismus (17) und der mindestens einen Arretiervorrichtung (6) umfassen.

4. Kinderwagen nach einem oder mehreren der vorhergehenden Ansprüche, **dadurch gekennzeichnet, dass** die ersten, zweiten oder dritten kinematischen Verbindungseinrichtungen ein umhülltes Kabel (20) umfassen.

5. Kinderwagen nach Anspruch 1 oder 3, **dadurch gekennzeichnet, dass** die mindestens eine Arretiervorrichtung (6) zwischen mindestens einem Verbindungsende (2c) und dem damit verbundenen Verbindungsabschnitt (2a, 2b, 2c) wirkt, wobei die Arretiervorrichtung (6) dazu ausgelegt ist, die relative Drehung des Verbindungsabschnitts (2a, 2b, 2c) im Hinblick auf das jeweilige Verbindungsende (2c) zu arretieren.

6. Kinderwagen nach einem oder mehreren der Ansprüche 1, 3 und 5, **dadurch gekennzeichnet, dass** die dritten Einrichtungen zur kinematischen Verbindung zwischen dem Verriegelungs-/Freisetzungsmechanismus (17) und der mindestens einen Arretiervorrichtung (6) eine Betätigungsstange (21) umfassen, die so angebracht ist, dass sie im Hinblick auf den jeweiligen oberen Holm (4a) gleiten kann.

7. Kinderwagen nach Anspruch 6, **dadurch gekennzeichnet, dass** die Betätigungsstange (21) einen Betätigungsstift (19) umfasst, der von einem Lösehebelsystem (22) in Eingriff genommen werden kann, das vom Verriegelungs-/Freisetzungsmechanismus (17) gehaltert ist und durch die Fernbetätigungseinrichtungen (8) betätigt werden kann.

8. Kinderwagen nach einem oder mehreren der vorhergehenden Ansprüche, **dadurch gekennzeichnet, dass** die Arretiervorrichtung (6) mit einer Betätigungsvorrichtung (31) versehen ist, die dazu ausgelegt ist, eine gegenseitige Arretierung zwischen dem jeweiligen Paar erster Verbindungselemente (30) nur dann zuzulassen, wenn der Rahmen (10) im vollständig offenen oder auseinandergeklappten Zustand ist.

9. Kinderwagen nach Anspruch 8, **dadurch gekennzeichnet, dass** die Betätigungsvorrichtung (31) einen Öffnungssensor (32) umfasst, der dazu konstruiert ist, aus einem aktiven Zustand, wenn der Rahmen (10) im offenen oder auseinandergeklappten Zustand ist, in einen inaktiven Zustand überzugehen, wenn der Rahmen (10) nicht im offenen oder auseinandergeklappten Zustand ist.

10. Kinderwagen nach Anspruch 9, **dadurch gekennzeichnet, dass** der Öffnungssensor (32) einen Haken umfasst, der zu einer unteren Stütze (33) geschwenkt wird, die am oberen Holm (4a) befestigt ist und durch eine Spannfeder (35) mit einem jeweiligen, an einer jeweiligen Betätigungsstange (21) ausgebildeten Eingriffsabschnitt (34) in Eingriff gehalten ist, wenn der Rahmen (10) im zusammengeklappten Zustand ist.

11. Kinderwagen nach Anspruch 10, **dadurch gekennzeichnet, dass** der Haken dazu konstruiert ist, wenn der Rahmen (10) im auseinandergeklappten Zustand ist, an einem am unteren Holm (4b) ausgebildeten Auflageabschnitt (36) aufzuliegen, um sich aus dem jeweiligen Eingriffsabschnitt (34) zu lösen.

## Revendications

1. Poussette comprenant un dispositif à poignée (1), qui comprend :
un corps de raccordement (2) muni d'une pluralité de premiers éléments de raccordement (30) comprenant deux extrémités de raccordement (2d) couplées à un second élément de raccordement respectif (3) prévu sur un côté respectif (4) d'un châssis (10) pour poussettes, châssis qui est conçu pour passer d'un état fermé ou replié à un état ouvert ou déplié et vice versa,
au moins deux portions de raccordement (2a, 2b, 2c) qui sont articulées l'une à l'autre et raccordent lesdites deux extrémités de raccordement (2d),
des moyens (5), qui sont prévus pour verrouiller le dispositif à poignée (1) avec ledit châssis (10) dans l'état ouvert ou déplié, lesdits moyens de verrouillage (5) comprenant au moins un dispositif de verrouillage (6) qui agit entre une paire de premiers éléments de raccordement (30) disposés de manière à être contigus l'un à l'autre et est adapté à verrouiller sur commande la rotation d'un second élément de raccordement (3) par rapport à l'autre,
des moyens (8) pour l'actionnement à distance dudit au moins un dispositif de verrouillage (6) comprenant une manette de soulèvement (8c),
chacun desdits deux côtés (4) dudit châssis (10) comprenant respectivement un montant avant (15) supérieur (4a) et inférieur (4b) et un montant arrière (16), ainsi qu'une structure articulée (18) pour relier entre eux les deux montants arrière (16),
un mécanisme (17) de verrouillage/déverrouillage mutuel entre ledit montant supérieur (4a) et le montant inférieur respectif (4b) étant prévu sur au moins un desdits deux côtés (4) pour la transition dudit châssis (10) dudit état ouvert ou déplié audit état fermé ou replié et vice versa, lesdits moyens pour l'actionnement à distance (8) dudit au moins un dispositif de verrouillage (6) étant conçus pour actionner ledit mécanisme de verrouillage/déverrouillage (17),
**caractérisée en ce que** lesdits moyens d'actionnement à distance (8) comprennent des premier moyens de liaison cinématique entre ladite manette de soulèvement (8c) et ledit dispositif de verrouillage (6),
lesdits moyens d'actionnement à distance (8) comprennent des seconds moyens de liaison cinématique entre ladite manette de soulèvement (8c) et ledit mécanisme de verrouillage/déverrouillage (17).

2. Dispositif à poignée suivant la revendication 1, **caractérisé en ce que** ladite manette de soulèvement (8c) est disposée essentiellement sur ladite structure articulée de liaison (18).

3. Poussette comprenant un dispositif à poignée (1) qui comprend :
un corps de raccordement (2) muni d'une pluralité de premiers éléments de raccordement (30) comprenant deux extrémités de raccordement (2d) couplées à un second élément de raccordement respectif (3) prévu sur un côté respectif (4) d'un châssis (10) pour poussettes, châssis qui est conçu pour passer d'un état fermé ou replié à un état ouvert ou déplié et vice versa,
au moins deux portions de raccordement (2a, 2b, 2c) qui sont articulées l'une à l'autre et raccordent lesdites deux extrémités de raccordement (2d),
des moyens (5), qui sont prévus pour verrouiller le dispositif à poignée (1) avec ledit châssis (10) dans l'état ouvert ou déplié, lesdits moyens de verrouillage (5) comprenant au moins un dispositif de verrouillage (6) qui agit entre une paire de premiers éléments de raccordement (30) disposés de manière à être contigus l'un à l'autre et est adapté à verrouiller sur commande la rotation d'un second élément de raccordement (3) par rapport à l'autre,
des moyens (8) pour l'actionnement à distance dudit au moins un dispositif de verrouillage (6),
chacun des deux côtés (4) dudit châssis (10) comprenant respectivement un montant frontal (15) supérieur (4a) et inférieur (4b) et un montant arrière (16), ainsi qu'une structure articulée (18) pour relier entre eux les deux montants arrière (16),
un mécanisme (17) pour le verrouillage/déverrouillage mutuel entre ledit montant supérieur (4a) et le montant inférieur respectif (4b) étant prévu sur au moins une desdits deux côtés (4) pour la transition dudit châssis (10) dudit état ouvert ou déplié audit état fermé ou replié et vice versa, lesdits moyens d'actionnement à distance (8) dudit au moins un dispositif de verrouillage (6) étant conçus pour actionner ledit mécanisme de verrouillage/déverrouillage (17), lesdits moyens d'actionnement à distance (8) comprenant une manette de soulèvement (8c), qui est disposée essentiellement sur ladite structure de liaison articulée (18),
**caractérisée en ce que** lesdits moyens d'actionnement à distance (8) comprennent des seconds moyens de liaison cinématique entre ladite manette de soulèvement (8c) et ledit mécanisme de verrouillage/déverrouillage (17) et des troisièmes moyens de liaison cinématique entre ledit mécanisme de verrouillage/déverrouillage (17) et ledit au moins un dispositif de verrouillage (6).

4. Poussette suivant une ou plusieurs des revendications précédentes, **caractérisée en ce que** lesdits premiers, seconds ou troisièmes moyens de liaison cinématique comprennent un câble sous gaine (20).

5. Poussette suivant la revendication 1 ou 3, **caractérisée en ce que** ledit au moins un dispositif de verrouillage (6) agit entre au moins une extrémité de raccordement (2c) et la portion de raccordement (2a, 2b, 2c), à laquelle il est associé, ledit dispositif de verrouillage (6) étant adapté à verrouiller la rotation relative de ladite portion de raccordement (2a, 2b, 2c) par rapport à l'extrémité de raccordement respective (2c).

6. Poussette suivant une ou plusieurs des revendications 1, 3 et 5, **caractérisée en ce que** lesdits troisièmes moyens de liaison cinématique entre ledit mécanisme de verrouillage/déverrouillage (17) et ledit au moins un dispositif de verrouillage (6) comprennent une bielle d'actionnement (21) qui est montée de manière à pouvoir coulisser par rapport au montant supérieur respectif (4a).

7. Poussette suivant la revendication 6, **caractérisée en ce que** ladite bielle d'actionnement (21) comprend une tige d'actionnement (19) qui peut être mise en prise par un système de levier de dégagement (22), qui est supporté par ledit mécanisme de verrouillage/déverrouillage (17), et peut être actionné par lesdits moyens d'actionnement à distance (8).

8. Poussette suivant une ou plusieurs des revendications précédentes, **caractérisée en ce que** ledit dispositif de verrouillage (6) est prévu avec un dispositif d'actionnement (31) qui est adapté à permettre le verrouillage mutuel entre la paire respective de premiers éléments de raccordement (30) seulement lorsque ledit châssis (10) est en état complètement ouvert ou déplié.

9. Poussette suivant la revendication 8, **caractérisée en ce que** ledit dispositif d'actionnement (31) comprend un capteur d'ouverture (32) qui est conçu pour passer d'un état actif, lorsque ledit châssis (10) est en état ouvert ou déplié, à un état inactif, lorsque ledit châssis (10) n'est pas en état ouvert ou déplié.

10. Poussette suivant la revendication 9, **caractérisée en ce que** ledit capteur d'ouverture (32) comprend un crochet qui est pivoté envers un support inférieur (33) qui est fixé audit montant supérieur (4a) et maintenu en prise avec une portion d'engagement respective (34) formée sur une bielle d'actionnement respective (21) par un ressort de chargement (35), lorsque ledit châssis (10) se trouve en état replié.

11. Poussette suivant la revendication 10, **caractérisée en ce que** ledit crochet est conçu pour buter contre une portion de butée (36) formée sur le montant inférieur (4b) de manière à se dégager de la portion d'engagement respective (34), lorsque ledit châssis (10) se trouve en état déployé.
